# FASCICULE DE BREVET EUROPEEN

(11) **EP 3 074 749 B1**
(45) Date de publication et mention de la délivrance du brevet: **03.01.2018**
(21) Numéro de dépôt: 14814948.7
(22) Date de dépôt: 24.11.2014
(51) Int. Cl.: G01N 15/08

(54) **PORTE ÉCHANTILLON ET DISPOSITIF DE PERMÉATION ASSOCIÉ**
PROBENHALTER UND ZUGEHÖRIGE PERMEATIONSVORRICHTUNG
SAMPLE HOLDER AND ASSOCIATED PERMEATION DEVICE

(30) Priorité: 26.11.2013 FR 1361658
(43) Date de publication de la demande: 05.10.2016
(73) Titulaire: Commissariat à l'Énergie Atomique et aux Énergies Alternatives, 75015 Paris (FR)
(72) Inventeur: CROS, Stéphane, F-73000 Chambery (FR); FAUVARQUE, Jean-Philippe, F-78620 L'Etang La Ville (FR); LEROY, Arnaud, F-73000 Chambery (FR); WALSH, Christine, F-92110 Clichy (FR)
(74) Mandataire: Cabinet Laurent & Charras
(86) Numéro de dépôt international: PCT/FR2014/053012
(87) Numéro de publication internationale: WO 2015/079151

(56) Documents cités:
- FR-A1- 2 715 471
- US-A- 4 531 404
- US-A- 5 659 130
- US-A- 5 979 223
- US-A1- 2006 236 755
- US-A1- 2010 054 998
- US-A1- 2011 168 023

## Description

### DOMAINE DE L'INVENTION

Le domaine de l'invention concerne les mesures de perméabilité d'un échantillon. Plus précisément, l'invention concerne une cellule de perméation comprenant un porte échantillon amovible.

### ETAT ANTERIEUR DE LA TECHNIQUE

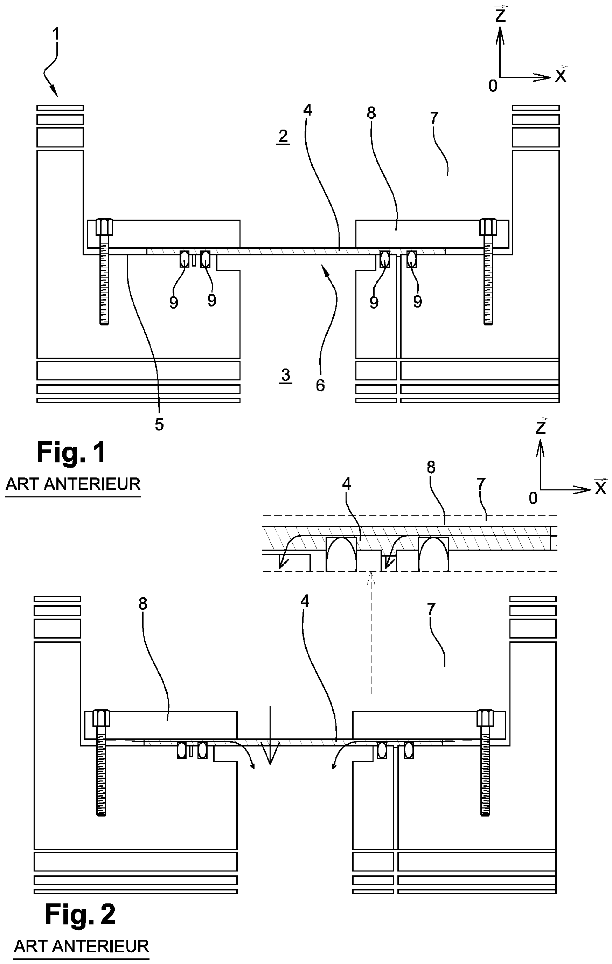

Les composants électroniques et les panneaux photovoltaïques à base de matériaux organiques sont particulièrement sensibles aux phénomènes d'oxydation créés par l'eau et le dioxygène. Afin de pouvoir augmenter la durée de vie de ces éléments, il est nécessaire de les protéger par un film qui est le moins perméable possible aux gaz oxydants.
Les mesures de perméabilité sont exprimées en flux d'eau transmis à travers un film, ou « *Water Vapor Transmission Rate* » en anglais (WVTR). Ces mesures expriment la quantité de gaz traversant orthogonalement la surface du film par jour (g.m⁻².d⁻¹). Les films les plus imperméables ou les plus barrières ont une valeur de WVTR de l'ordre de 10⁻⁶ g.m⁻².d⁻¹.
Pour effectuer ce type de mesure et en se référant à la figure 1, un film protecteur ou échantillon est placé dans une cellule de perméation (1), comprenant une chambre amont (2) et une chambre aval (3). Plus précisément, l'échantillon (4) est maintenu à proximité du fond (5) de la chambre amont de manière à obturer une ouverture (6) reliant les deux chambres. Après fermeture par un capot, la chambre amont est remplie d'un gaz cible (7), par exemple de la vapeur d'eau. Dans la chambre aval (3), est disposé un dispositif de détection (non représenté) capable de détecter le gaz présent dans la chambre aval (3), et par conséquent ayant diffusé depuis la chambre amont (2) à travers l'échantillon (4).

Des exemples de dispositif de perméation sont décrits dans les documents US2006/0236755, US5659130, US4531404, 7,624,621 et US 8,388,742.

En raison de l'importance du rapport signal sur bruit pour réaliser des mesures de haute sensibilité, le phénomène de contamination de l'enceinte aval par le gaz cible lors de la mise en place de l'échantillon est critique. Ce phénomène de contamination consiste essentiellement en l'adsorption des gaz par les parois de l'enceinte aval. Pour obtenir une mesure de qualité, il convient que le gaz présent dans la chambre aval ne soit issu que de la diffusion à travers l'échantillon et puisse être distingué du bruit provenant de la désorption des gaz ayant contaminés la chambre aval.

La mise en place de l'échantillon dans la chambre amont (2) nécessite l'ouverture de la cellule de perméation, et donc l'exposition des chambres à l'atmosphère, ainsi que des manipulations délicates et longues pour obturer correctement l'ouverture (6) avec l'échantillon (4). Le temps de manipulation peut être notamment lié aux étapes de mise en place de l'échantillon et de serrage de joints assurant l'étanchéité entre l'échantillon (4) et le fond (5) de la chambre amont. Durant cette opération, tant que la chambre amont (2) n'est pas fermée, les chambres amont et aval sont contaminées par l'atmosphère. Pour permettre des mesures fines de perméabilité d'espèces gazeuses présentes dans l'atmosphère, il est alors nécessaire de purger avec un gaz neutre ou de faire un vide poussé dans la chambre aval contenant le dispositif de détection avant de réaliser les mesures afin de décontaminer au maximum la chambre avale et ainsi réduire le bruit correspondant au gaz cible de la mesure. Le temps de purge ou de mise sous vide permettant d'obtenir un bruit de fond donné est d'autant plus long que le temps d'ouverture à l'atmosphère pour la mise en place de l'échantillon est long. De ce fait, des mesures de perméabilité de haute sensibilité pour lesquelles le bruit de fond doit être faible, nécessitent actuellement un temps important de décontamination de la chambre aval qui allonge d'autant le temps total de la mesure.

Quand bien même la contamination de la chambre aval n'impacterait que de manière minime la sensibilité de la mesure, certains dispositifs de détection nécessitent cependant un vide poussé de la chambre aval pour pouvoir fonctionner C'est particulièrement le cas lorsque le dispositif de détection est un spectromètre de masse pour lequel il est nécessaire d'atteindre un niveau de vide suffisamment bas avant de pouvoir l'utiliser.

Or, la durée de purge ou de mise sous vide de la chambre aval est également fortement liée au temps de contamination de la chambre avale par l'atmosphère et impacte d'autant le temps total d'une expérience. Ainsi, si des mesures rapides sont enchainées sur un grand nombre d'échantillons, comme dans le cas du dispositif de détection de perméation à l'hélium tel que décrit dans le brevet 7,624,621, le temps nécessaire à la purge de la chambre aval après chaque changement d'échantillon peut devenir supérieur au temps de mesure et considérablement allonger le temps total de l'expérience.

Un autre inconvénient des cellules de perméation actuelles concerne le maintien de l'échantillon (4) au niveau de l'ouverture (6) reliant les deux chambres (2) (3). Généralement, l'échantillon (4) est scellé sur l'ouverture (6) par un châssis (8) vissé au fond de la chambre amont, qui presse l'échantillon contre ledit fond (figure 1). Le châssis exerce alors des contraintes mécaniques sur l'échantillon, susceptibles de le détériorer, par exemple en déformant sa structure ou en rayant sa surface, notamment au niveau du contact avec les joints (9). C'est pour cela que les mesures de perméation sont souvent considérées comme destructives pour les films fragiles. De ce fait, si l'échantillon est mesuré une première fois, puis sorti de la cellule, une deuxième mesure sur l'échantillon est problématique en raison d'un doute sérieux quant à l'endommagement de l'échantillon lors de la première mesure. En effet, le positionnement de l'échantillon dans la cellule n'est généralement pas très précis, de sorte que sa mise en place dans une cellule peut être réalisée dans une configuration qui diffère de celle de la première mesure. Les détériorations mentionnées ci-dessus peuvent donc être présentes au niveau de la surface exposée au gaz cible lors de la deuxième mesure, ce qui fausse la mesure.

De plus, la manipulation d'un échantillon induit toujours un doute quant à la préservation de son intégrité. En effet, par exemple, les films protecteurs susmentionnés sont d'une épaisseur réduite et la manipulation de tels films est usuellement très délicate.

Ainsi, un échantillon mesuré une première fois n'est aujourd'hui pas considéré comme suffisamment intègre pour être mesuré une deuxième fois. Cela limite nettement son étude dans différentes conditions (climatiques notamment).

Un autre inconvénient lié aux cellules de perméation de l'état de la technique concerne le phénomène de perméation latérale selon l'axe x tel que représenté sur la figure 2, c'est-à-dire dans le plan de l'échantillon. Une mesure de perméation consiste théoriquement à mesurer le flux d'un gaz cible traversant l'échantillon de façon orthogonale, soit selon l'axe z tel que représenté sur la figure 2. En théorie, le châssis (8) permet de définir précisément la surface de l'échantillon en contact avec le gaz cible. Dans la pratique, pour les échantillons comprenant des couches de perméabilité différentes, le gaz cible (7) peut diffuser latéralement dans les couches les moins perméables. C'est par exemple le cas pour les films comprenant un substrat plastique, formant une faible barrière aux gaz, recouvert par une couche organique dense, constituant une forte barrière aux gaz. La surface de l'échantillon exposée au gaz cible ne correspond donc plus à celle délimitée par le châssis. De ce fait, les mesures peuvent être faussées si la perméation latérale n'est pas négligeable par rapport à la perméation orthogonale.

### EXPOSE DE L'INVENTION

La présente invention vise à proposer une cellule de perméation permettant un positionnement reproductible de l'échantillon dans la cellule, tout en préservant l'intégrité de la portion d'échantillon placée dans le passage reliant les deux chambres de la cellule.
La présente demande vise à résoudre le problème technique mentionné ci-dessus, en proposant une cellule de perméation apte à réaliser une mesure de perméation d'un gaz cible à travers un échantillon. La cellule de perméation selon l'invention est défini dans la revendication 1 et les dépendantes 2-12. Par le terme « ouverture », on entend un passage entre deux zones permettant à un fluide de passer entre lesdites zones. Par le terme «joint primaire », on entend un ou plusieurs joints appartenant à même groupe dénommé « primaire ».
Les moyens d'assemblage de la cellule permettent de façon avantageuse de presser la face arrière du châssis inférieur du porte échantillon contre le premier joint primaire, de manière à empêcher à un fluide présent dans la chambre amont de rejoindre la chambre aval en passant entre la face arrière du châssis inférieur et le fond de la chambre amont. En d'autres termes, un fluide provenant de la chambre amont peut rejoindre la chambre aval uniquement en passant à travers l'ouverture traversant le châssis inférieur.
Pour cela, le premier joint primaire présente avantageusement une forme torique de manière à former une barrière étanche tout autour de l'ouverture reliant la chambre aval à la chambre amont et entre la face arrière du châssis inférieur et le fond de la chambre amont.
Les moyens d'assemblage du porte échantillon permettent avantageusement de contrôler la distance entre la face avant du châssis inférieur et la face arrière du châssis supérieur, pour éventuellement permettre aux châssis de prendre en étau un échantillon de manière à obturer leur ouverture respective. Ainsi, un gaz cible présent dans la chambre amont pourra rejoindre la chambre aval uniquement en passant à travers l'échantillon, lorsque la face arrière du châssis inférieur est pressée contre le premier joint primaire au contact du fond de la chambre aval.

De façon avantageuse, les moyens d'assemblage du porte-échantillon et les moyens d'assemblage de la cellule sont distincts. De ce fait, l'échantillon peut être placé dans le porte échantillon amovible avant son introduction dans la chambre amont. La fixation de l'échantillon dans le fond de la chambre amont peut alors être réalisée plus rapidement par l'intermédiaire des deuxièmes moyens de maintien. Cela permet de limiter le temps d'ouverture et de contamination des chambres de la cellule de perméation, et donc de diminuer de façon significative le temps nécessaire pour préparer ladite cellule avant de réaliser des mesures de perméation.

Un autre avantage lié au porte échantillon amovible est la possibilité de mettre en place et de sortir l'échantillon de la chambre amont sans qu'il soit pour cela nécessaire de manipuler directement l'échantillon. En effet, l'échantillon peut être retiré facilement de la chambre amont en manipulant uniquement le châssis supérieur et/ou le châssis inférieur. Ainsi, d'une part on s'assure de ne pas détériorer l'échantillon lors de sa mise en place et de son retrait de la cellule de perméation, et d'autre part on peut être certain de reproduire des mesures de perméation de façon identique sur un échantillon après l'avoir sorti de la chambre amont. En effet, les châssis sont solidaires de l'échantillon grâce aux moyens d'assemblage du porte-échantillon, de sorte que le porte échantillon et l'échantillon peuvent être placés dans les conditions désirées (vieillissement photochimique par exemple), puis remesurés sans risque d'altération mécanique liée à la manipulation de l'échantillon. En outre, les moyens d'assemblage de la cellule, par exemple réalisés aux moyens de vis, font également office de moyens de positionnement du porte-échantillon dans la cellule, ce dernier étant placé dans une position précise connue, avantageusement unique.

Les moyens d'assemblage peuvent être réalisés de différentes façons. Par exemple, les moyens d'assemblage du porte-échantillon peuvent comprendre au moins deux vis traversant les faces avant et arrière du châssis supérieur et la face avant du châssis inférieur. Les moyens d'assemblage de la cellule peuvent par exemple comprendre au moins deux vis traversant les faces avant et arrière des châssis supérieur et inférieur, lesdites vis étant vissées dans des logements dédiés, ménagés dans le fond de la chambre amont. Bien entendu, tous autres moyens d'assemblage ou de maintien remplissant les mêmes fonctions peuvent être envisagés. Par exemple, les moyens d'assemblage de la cellule peuvent être substitués par un moyen permettant de presser la face avant du châssis supérieur de manière à maintenir la face arrière du châssis inférieur contre le premier joint primaire.

Selon une alternative, les moyens d'assemblage du porte-échantillon comprennent au moins un ergot visant à maintenir les deux châssis en regard en maintenant éventuellement un échantillon entre eux.

Pour s'assurer que la pression est homogène entre le premier et le deuxième joints primaires, une rainure peut avantageusement être ménagée entre le premier et le deuxième joints primaires, et de préférence tout autour du deuxième joint primaire.

Selon une autre caractéristique du porte échantillon amovible, un premier joint dit secondaire peut affleurer à la face avant du châssis inférieur et entourer l'ouverture traversante de ce châssis. Par le terme « secondaire », on entend un ou plusieurs joints appartenant à un même groupe dit secondaire, pour les différencier des joints appartenant au groupe dit primaire. Les joints peuvent être formés à partir d'un matériau élastomère ou métallique.

Le deuxième canal, les joins primaires et secondaires peuvent permettent à des moyens de pompage connectés au premier canal d'aspirer un fluide présent dans l'espace délimité entre les joints secondaires et la face avant du châssis inférieur. Ainsi, dans le cas où un échantillon est en contact avec les joints secondaires, le moyen de pompage peut améliorer l'étanchéité entre l'échantillon et le châssis inférieur de manière à empêcher au gaz cible de passer dans la chambre aval par ce passage.

Eventuellement, afin de permettre une aspiration plus homogène dans l'ensemble de la zone délimitée par les joints secondaire, le deuxième canal peut comprendre une rainure ménagée sur la face avant du châssis inférieur du porte échantillon entre les deux joints secondaires. De préférence, la rainure entoure le premier joint secondaire.

Selon une autre caractéristique de la cellule de perméation, celle-ci peut comprendre un troisième canal qui débouche dans le fond de la chambre amont entre le premier joint primaire et une paroi latérale délimitant la chambre amont et son fond. En d'autres termes, la chambre amont est délimitée par un fond et une paroi latérale délimitant le pourtour dudit fond.

De façon avantageuse, un troisième joint dit primaire peut alors être en contact avec le châssis supérieur du porte échantillon et la paroi latérale de la chambre amont, de manière à permettre à des moyens de pompage connectés au troisième canal d'améliorer l'étanchéité entre le premier et le troisième joints primaires.

Eventuellement, le porte échantillon peut comprendre un troisième joint dit secondaire affleurant la face arrière du châssis supérieur et entourant l'ouverture traversante du châssis, de manière à améliorer l'étanchéité entre la face arrière du châssis et un échantillon pris en étaux entre le châssis inférieur et supérieur, pour limiter le phénomène de perméation latérale mentionné ci-dessus.

Selon une alternative, la cellule de perméation peut comprendre :
- un troisième joint dit primaire en contact avec le fond de la chambre amont et la face arrière du châssis inférieur du porte échantillon, le quatrième joint entourant le troisième canal et le premier joint primaire ; et
- le porte échantillon comprend :
   - un troisième joint dit secondaire affleurant la face arrière du châssis supérieur et entourant l'ouverture traversante du châssis supérieur ;
   - un quatrième joint dit secondaire en contact avec la face arrière du châssis supérieur et la face avant du châssis inférieur, le quatrième joint entourant le troisième joint secondaire ;
   - un quatrième canal débouchant entre le premier et le quatrième joint secondaires et entre le premier et le troisième joints primaires.

De façon avantageuse, lorsqu'un échantillon est pris en étau entre les châssis supérieur et inférieur et qu'il est en contact avec le premier, le deuxième et le troisième joints secondaires, le quatrième canal relié à des moyens de pompage par l'intermédiaire du troisième canal, permet d'améliorer l'étanchéité à la périphérie de l'échantillon pour limiter le phénomène de perméation latérale mentionné ci-dessus.

Eventuellement, afin de permettre une aspiration plus homogène par le quatrième canal dans la zone délimitée par lesdits joints secondaires, le quatrième canal peut comprendre une rainure ménagée sur la face avant du châssis inférieur du porte échantillon entre le premier et le quatrième joints secondaires. De préférence, la rainure entoure le premier joint secondaire.

La présente demande concerne également un dispositif de mesure de perméation comprenant une cellule de perméation telle que décrite ci-dessus, comportant un canal reliant la chambre aval à un dispositif de détection situé à l'extérieur de la cellule, ledit dispositif étant apte à détecter la présence et la quantité d'un gaz cible provenant de la chambre amont de ladite cellule.

La présente demande concerne également un procédé de mise en place d'un échantillon dans un support amovible décrit ci-dessus, consistant selon une première étape à écarter suffisamment les châssis supérieur et inférieur pour permettre à un échantillon d'obturer l'ouverture traversante du châssis inférieur, puis selon une deuxième étape, de maintenir la face arrière du châssis supérieur au plus proche de l'échantillon par l'intermédiaire des moyens d'assemblage du porte échantillon amovible. Ainsi l'échantillon est maintenu entre les deux châssis, ce qui permet de déplacer l'échantillon sans qu'il soit nécessaire de le saisir directement. Le porte échantillon amovible permet donc de préserver l'intégrité de l'échantillon lors de sa mise en place dans une cellule de perméation.

De préférence, l'échantillon est au contact du premier et/ou du deuxième et/ou du troisième joints primaires de manière à améliorer l'étanchéité entre l'échantillon et le châssis supérieur et/ou le châssis inférieur.

Eventuellement, un support poreux peut être agencé entre le châssis inférieur et l'échantillon pour supporter mécaniquement l'échantillon lors des mesures de perméation.

Le porte échantillon amovible comprenant l'échantillon peut ensuite être placé dans une cellule de perméation telle que décrite ci-dessus, en positionnant selon une première étape la face arrière du châssis inférieur au contact du premier et/ou du deuxième et/ou du troisième et/ou du quatrième joints primaires et que l'ouverture traversante du châssis inférieur soit en regard de l'ouverture reliant la chambre aval à la chambre amont, puis selon une deuxième étape, à l'aide des moyens d'assemblage de la celllule, presser la face arrière du châssis inférieur du porte échantillon contre au moins le premier joint primaire.

### DESCRIPTION DES FIGURES

La manière dont l'invention peut être réalisée et les avantages qui en découlent, ressortiront mieux de la description des modes de réalisation qui suivent, donnés à titre indicatif et nullement limitatif à l'appui des figures annexées dans lesquelles :
- la figure 1 est une coupe schématique de face d'une cellule de perméation selon l'état de la technique ;
- la figure 2 est une autre coupe schématique de face d'une cellule de perméation selon l'état de la technique, illustrant le phénomène de perméation latérale ;
- la figure 3A est une coupe schématique de face d'un premier mode de réalisation d'un porte échantillon selon l'invention ;
- la figure 3B est une vue schématique de dessus du premier mode de réalisation selon la figure 3A ;
- la figure 4 est une coupe schématique de face d'un second mode de réalisation d'un porte échantillon selon l'invention ;
- la figure 5 est une coupe schématique de face d'un troisième mode de réalisation d'un porte échantillon selon l'invention ;
- la figure 6 est une coupe schématique de profil du premier mode de réalisation ;
- la figure 7 est une coupe schématique de face d'un autre mode de réalisation d'un porte échantillon selon l'invention ;
- la figure 8 est une vue schématique de dessus du fond de la chambre amont d'une cellule de perméation selon l'invention ;
- la figure 9 est une coupe schématique transversale d'une cellule de perméation selon l'invention, comprenant un porte échantillon représenté en figure 3A :
- la figure 10 est une coupe schématique transversale d'une cellule de perméation selon l'invention, comprenant un porte échantillon représenté en figure 4 ;
- la figure 11 est une coupe schématique transversale d'une cellule de perméation selon l'invention, comprenant un porte échantillon représenté en figure 5 ;
- la figure 12 est une coupe schématique transversale d'un dispositif de perméation selon l'invention, comprenant un porte échantillon représenté en figure 7.

Les figures comportent des repères orthogonaux afin de faciliter leur compréhension.

### MODES DE REALISATION DE L'INVENTION

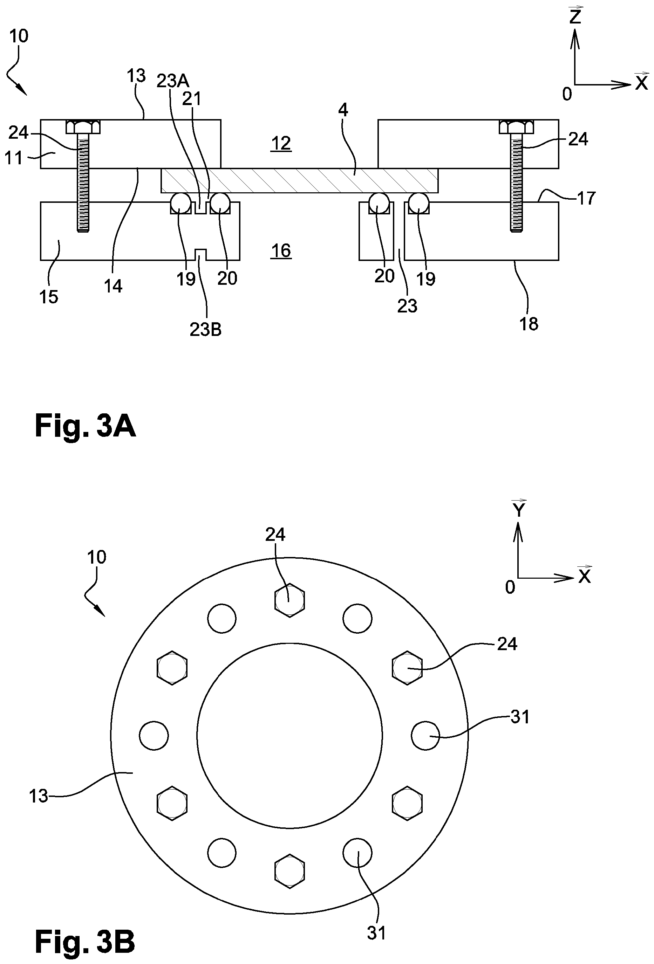

Les figures 3A et 3B représentent un premier exemple de réalisation d'un porte échantillon (10) amovible selon l'invention. Il comporte un châssis supérieur (11) comprenant une ouverture traversante (12), reliant une face avant (13) à une face arrière (14). Il comporte également un châssis inférieur (15) comprenant une ouverture traversante (16) reliant une face avant (17) à une face arrière (18).

La face avant du châssis inférieur (15) comporte un premier joint torique (19) qui entoure l'ouverture traversante (16). Ce premier joint (19) entoure un deuxième joint torique (20) de manière à délimiter un premier espace confiné (21) ou zone, entre un échantillon (4) maintenu entre les deux châssis (11, 15), les deux joints (19, 20) et le châssis inférieur (15). Le châssis inférieur (15) comporte au niveau de sa face avant (17) une première rainure (22A) ménagée entre les joints de façon coaxiale.

Un premier canal (23) du porte échantillon relie les faces arrière et avant du châssis inférieur (15). Il comprend une première rainure (23A) ménagée dans la face avant (17) du châssis inférieur, et une deuxième rainure (23B) ménagée dans la face arrière (18) dudit châssis. La deuxième rainure peut être coaxiale à l'ouverture traversante (16). En variante, la deuxième rainure est réalisée de biais par rapport à l'ouverture (16), ce qui permet de pouvoir utiliser des porte-échantillons présentant des dimensions différentes par rapport à la cellule.

Le porte échantillon (10) comprend des vis (24), par exemple au nombre de six, permettant de maintenir fermement l'échantillon (4) entre les deux châssis. Les vis (24) et les trous taraudés correspondants réalisées dans les châssis permettent ainsi d'assembler simplement le porte échantillon en mettant les ouvertures des châssis en regard l'une de l'autre, et de désassembler le porte échantillon afin d'écarter suffisamment les châssis l'un de l'autre pour placer l'échantillon, par exemple en rendant ceux-ci libres l'un par rapport à l'autre. L'échantillon obture les ouvertures traversantes (12, 16). Les vis permettent également de compresser les joints toriques (19, 20) présents entre l'échantillon et le châssis inférieur pour améliorer leur propriété d'étanchéité.

Avantageusement, le premier canal (23) du porte échantillon peut permettre à des moyens de pompage (non représentés) de pomper ou d'injecter un gaz neutre dans l'espace confiné (21). La première rainure (22A) permet entre autre un pompage plus homogène entre les deux joints (19, 20).

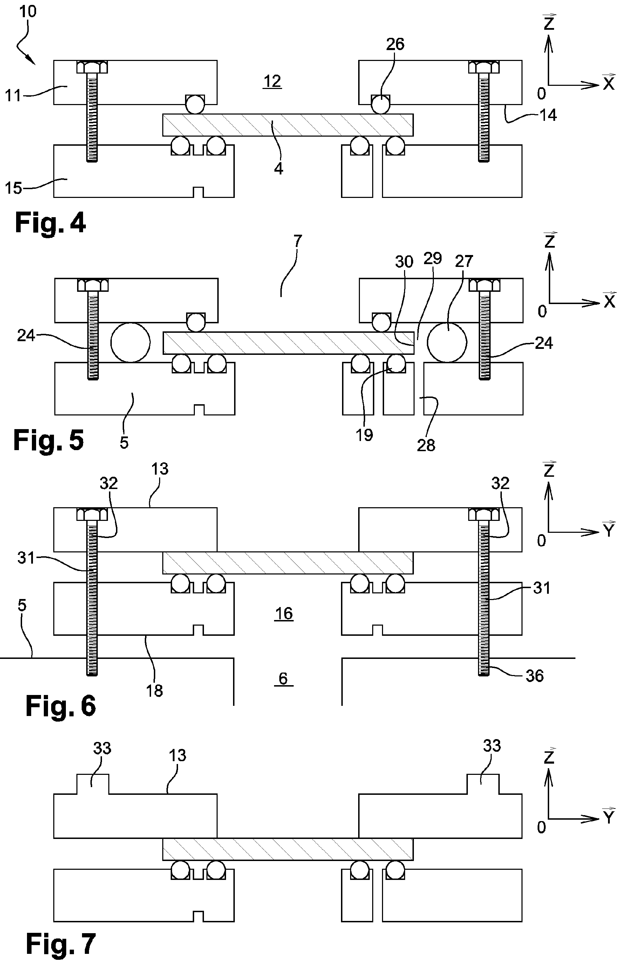

La figure 4 représente un deuxième exemple de réalisation de l'invention, se distinguant de l'exemple précédent par la présence d'un troisième joint torique (26) affleurant la face arrière (14) du châssis supérieur (11). Ce troisième joint entoure l'ouverture traversante (12) et est positionné de manière à être en contact avec un échantillon (4) pris en étau entre les châssis (11, 15).

La figure 5 illustre un troisième exemple de réalisation de l'invention, comprenant en plus par rapport au second exemple, un quatrième joint torique (27) en contact avec les deux châssis lorsqu'ils sont maintenus ensemble par l'intermédiaire des vis (24). Ce quatrième joint peut être solidaire de l'un des châssis. Le châssis inférieur (15) comporte un deuxième canal (28) du porte échantillon, parallèle au premier canal (23) et débouchant entre le premier joint (19) et le quatrième joint (27).

Avantageusement, ce mode de réalisation permet de délimiter un deuxième espace confiné (29) autour du bord (30) de l'échantillon (4). Plus précisément, cet espace est délimité par le premier, le troisième et le quatrième joints se trouvant entre les deux châssis.

Les dimensions des joints sont choisies de manière à pouvoir isoler de façon hermétique le bord (30) de l'échantillon, d'un gaz cible (7) présent au-dessus du châssis inférieur (15). De même que pour le premier canal, le deuxième canal (28) peut permettre à des moyens de pompage d'injecter un gaz inerte ou d'abaisser la pression dans ce deuxième espace confiné (29).

Les portes échantillons décrits ci-dessus comportent six alésages (31) comme représentés sur la figure 3B et la figure 6, reliant la face avant (13) du châssis supérieur (11) à la face arrière (18) du châssis inférieur (15). Les alésages sont répartis de manière homogène le long de la périphérie du porte échantillon (10). Ils permettent à des vis (32) de maintenir, par exemple, le premier porte échantillon à proximité du fond (5) d'une chambre amont appartenant à une cellule de perméation telle que décrite ci-dessous. Les vis permettent un positionnement précis et rapide du porte échantillon dans la chambre avale de la cellule grâce à des trous taraudés (36) présents dans le fond (5) de la chambre amont. Elles permettent également de désassembler aisément le porte échantillon de la cellule afin de sortir le porte échantillon de la cellule

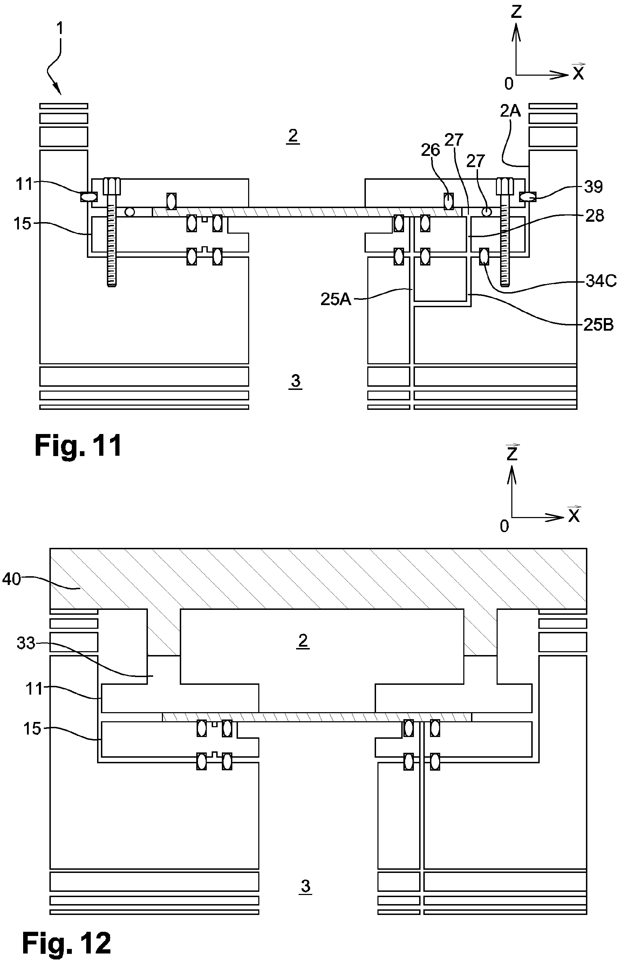

Selon une variante de réalisation plus avantageuse représentée sur la figure 7, la face avant (13) du châssis supérieur comporte un cerclage (33) positionné et dimensionné de telle sorte à coopérer avec un dispositif de fermeture (40) de la chambre amont (2) représenté en figure 12. Lorsque la chambre est fermée, le dispositif de fermeture presse et maintient le porte échantillon sur le fond (5) et les châssis supérieurs et inférieur l'un vers l'autre. Le cerclage permet une répartition homogène de la pression sur le porte échantillon (10). Dans ce cas, les vis permettant de maintenir ensemble les châssis du porte échantillon peuvent être remplacées par des ergots de maintien ou de positionnement du fait que le serrage est appliqué par le dispositif de fermeture. En d'autres termes, le porte échantillon peut alors ne pas comprendre de vis telles que mentionnées ci-dessus.

La présente demande concerne également une cellule de perméation (1) apte à coopérer avec l'un des portes échantillons décrit ci-dessus.

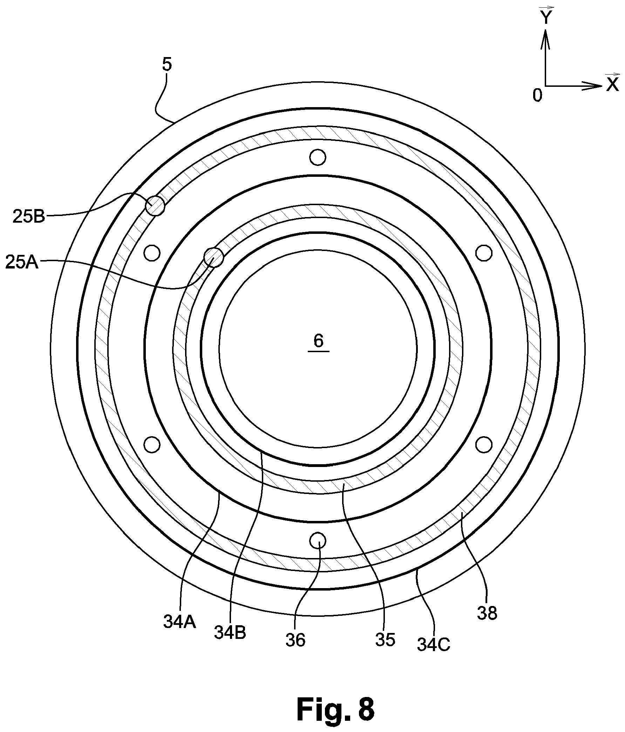

Selon un premier exemple de réalisation illustré sur la figure 8, la cellule de perméation (1) comprend une chambre amont (2) délimitée par un fond (5), ledit fond comprenant :
- au moins un premier joint primaire (34A) et un deuxième joint primaire (34B) entourant tous deux une ouverture (6) ;
- une première rainure (35) ménagée dans le fond de la chambre entre les deux joints primaires de façon coaxiale avec ladite ouverture ;
- un premier canal (25A) de pompage débouchant dans la rainure (35) et relié à des moyens de pompage (non représentés) et;
- des trous taraudés (36), au nombre par exemple de six, ménagés dans le fond (5).

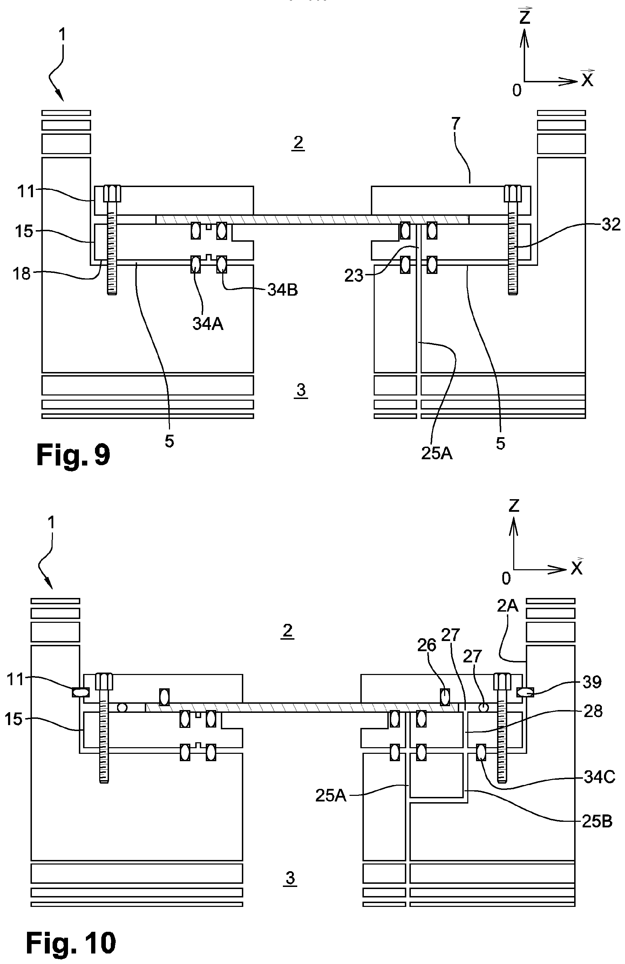

Les trous taraudés sont disposés dans le fond (5) de la chambre amont de manière à permettre un positionnement rapide et précis du porte échantillon à l'aide des vis (32) mentionnées ci-dessus (figure 9).

Les joints primaires (34A, 34B) sont positionnés de sorte que le premier canal (25A) débouche entre lesdits joints. Des moyens de pompage reliés au premier canal (25A) peuvent alors injecter un gaz neutre ou abaisser la pression dans le premier espace confiné (21) du porte échantillon (10) défini ci-dessus, par l'intermédiaire du premier canal (23) du porte échantillon.

Afin de permettre également le pompage du deuxième espace confiné (29) dans le porte échantillon décrit ci-dessus (figure 5), le fond (5) peut comporter :
- un troisième joint (34C) primaire entourant les autres joints (34A, 34B) primaires ;
- une deuxième rainure (38) aménagée dans le fond (5) entre le deuxième et le troisième joints primaires ;
- un quatrième canal (25B) de pompage débouchant dans la deuxième rainure (38) (figure 8).

De même que précédemment, le premier et le troisième joints primaires sont positionnés de telle sorte que le quatrième canal (25B) du porte échantillon débouche entre lesdits joints. Ainsi, des moyens de pompage reliés au quatrième canal (25B) peuvent injecter un gaz neutre ou abaisser la pression dans le deuxième espace confiné (29) du porte échantillon (figure 10), par l'intermédiaire du deuxième canal (28) du porte échantillon.

Selon une variante de réalisation, une paroi latérale (2A) de la chambre amont comporte un joint latéral torique (39) inscrit dans un plan parallèle au fond (5) (figure 11). Le joint latéral (39) est positionné de manière à être en contact avec le châssis supérieur (11) lorsque le porte échantillon est placé dans la chambre amont. Ce mode de réalisation est particulièrement pertinent lors de l'utilisation d'un porte échantillon tel que représenté sur la figure 4. En effet, le deuxième et le troisième joints du porte échantillon et le joint latéral isole de façon hermétique le bord (30) de l'échantillon (4). Ainsi, le phénomène de perméation latérale évoqué précédemment est limité.

Selon une alternative, le fond (5) de la chambre amont peut ne pas comporter de trous taraudés. Le porte échantillon est alors maintenu contre les joints primaires et éventuellement le joint secondaire par l'intermédiaire d'un dispositif de fermeture (40) de la chambre (figure 11).

Selon une autre alternative, le porte échantillon représenté à la figure 7 peut être maintenu contre les joints primaires (34A, 34B) par l'intermédiaire d'un dispositif de fermeture (40) de la chambre amont (2) d'une cellule de perméation. Le cerclage (33) présent sur la face avant du châssis supérieur peut coopérer avec le dispositif de fermeture pour que ledit dispositif exerce une force sur le porte échantillon, propre à le maintenir sur le fond (5) de la chambre amont (2). De cette façon, la mise en place de l'échantillon (4) est encore plus rapide car il n'est plus nécessaire de procéder à une quelconque étape de vissage comme décrit ci-dessus.

De façon avantageuse, le dispositif de fermeture peut coopérer avec un filetage (non représenté) présent sur la face externe de la cellule de perméation, de manière à permettre d'appliquer une force progressive sur le porte échantillon pour le presser contre les joints primaires (34A, 34B) présents sur le fond (5).

La présente invention concerne également un procédé de mise en place d'un porte échantillon (10) tel que décrit-précédemment dans le fond (5) d'une chambre amont (2) d'une cellule de perméation mentionnée ci-dessus. Ce procédé comprend une première étape consistant à mettre en contact la face arrière du châssis inférieur du porte échantillon avec les joints primaires (34A, 34B, 34C) de la chambre aval, de manière à ce que lesdits joints entourent le premier canal (23) du porte échantillon et que l'ouverture traversante (16) soit positionnée en vis-à-vis de l'ouverture (6). Une deuxième étape consiste à activer des moyens de pompage reliés au premier canal (25A) (non représentés) pour injecter un gaz inerte ou bien pomper un gaz présent dans le premier espace confiné (21).

Selon une variante, le procédé peut comporter entre ces deux étapes, une étape de maintien du porte échantillon à proximité du fond (5). Cette étape peut consister à visser les vis (32) dans trous taraudés (36) présents au niveau du fond (6), ou bien à visser le dispositif de fermeture (40) de la chambre amont de sorte à presser le porte échantillon contre les joints primaires (34A, 34B).

Un porte échantillon décrit ci-dessus offre l'avantage de positionner l'échantillon (4) entre ses deux châssis (11, 15) à l'extérieur de la cellule de perméation (1). De ce fait, les manipulations pour maintenir un échantillon fragile sur un support ne sont plus réalisées à l'intérieur de la cellule de perméation. La mise en place de l'échantillon dans la chambre amont est donc plus aisée et plus rapide. Le porte échantillon peut être maintenu au fond de la chambre avale par simple vissage dans des logements dédiés (figures 9 et 10), ou bien par le dispositif de fermeture (40) de la chambre amont (figure 11). Le temps d'exposition de la chambre avale au gaz cible est alors diminué lors de la mise en place et lors du retrait de l'échantillon.

La coopération entre le porte échantillon et le dispositif de mesure permet donc une obturation plus rapide et plus simple de l'ouverture (6) par l'échantillon (4). De ce fait, le temps d'ouverture des deux chambres (2, 3) est réduit à son minimum.

Avantageusement, au moins deux portes échantillons sont utilisés en alternance dans un dispositif de perméation, afin que l'ouverture (6) soit obturée en permanence par l'un des portes échantillon, à l'exception bien entendu des phases de montage et de démontage de ces derniers.

Un autre avantage lié au porte échantillon selon l'invention réside dans le fait que son introduction et son retrait peuvent se faire à volonté dans la chambre amont (2), sans qu'il soit nécessaire pour cela de le manipuler directement. Autrement dit, la surface libre de l'échantillon est conservée intacte lors de son retrait hors de la cellule de perméation. Il est alors possible d'effectuer des tests de différentes natures entre deux séries de mesures de perméabilité, tout en préservant la structure et l'état de surface de l'échantillon. Le porte échantillon permet donc de réaliser des mesures de perméativité sur des films fragiles qui sont reproductibles.

Les canaux du châssis inférieur (22A, 22B), les joints (19, 20, 26, 27) les entourant et les moyens de pompage (25) appartenant au dispositif de mesure (1) permettent d'assurer une étanchéité optimisée entre le bord (30) de l'échantillon et la chambre aval de façon rapide et sûre. En effet, lorsque le châssis inférieur est en contact avec les joints (34, 37) présents au niveau du fond (5) de la chambre amont, les moyens de pompage peuvent rapidement injecter un gaz inerte ou bien pomper un gaz se trouvant entre les joints pour assurer une étanchéité optimisée entre l'échantillon et les supports d'une part, et entre le porte échantillon et le fond (5) de la chambre aval (2) d'autre part. Il est ainsi possible de dégazer l'échantillon avec le porte échantillon, dans une étape préalable à la mesure de perméabilité.

La combinaison entre un porte échantillon et un dispositif de mesure selon l'invention permet également de limiter le phénomène de perméation latéral car, le bord (30) de l'échantillon est avantageusement isolé de façon hermétique du gaz cible (7) présent dans la chambre amont grâce aux joints mentionnés ci-dessus. Ainsi, la surface de l'échantillon exposée au gaz cible est connue précisément, elle correspond à la surface de l'ouverture traversante (12). Les mesures ne sont plus faussées par le phénomène de perméation latérale.

## Revendications

1. Cellule de perméation (1) apte à réaliser une mesure de perméation d'un gaz cible (7) à travers un échantillon (4) comprenant :
- un châssis supérieur délimitant une chambre amont (2) susceptible de contenir le gaz cible (7) et délimitée par un fond (5) ;
- un châssis inférieur délimitant une chambre aval (3) destinée à être en communication fluidique avec un dispositif de détection du gaz cible ;
- une ouverture (6) reliant la chambre aval (3) à la chambre amont (2) et débouchant dans le fond (5) de la chambre amont ;
- un premier joint (34A) dit primaire au contact du fond (5) de la chambre amont et entourant l'ouverture (6) ;
- des moyens de fixation de l'échantillon dans le fond (5) de la chambre amont (2) ;
les moyens de fixation comportant :
- un porte échantillon (10) amovible de sorte qu'il est détachable des châssis supérieur et inférieur de la cellule, le porte échantillon comprenant :
• un châssis supérieur (11) muni d'une face avant (13) et d'une face arrière (14) reliées par une ouverture traversante (12) ;
• un châssis inférieur (15), apte à être écarté du châssis supérieur, muni d'une face avant (17) et d'une face arrière (18) reliées par une ouverture traversante (16) ;
• des moyens d'assemblage du porte-échantillon (24, 33) réglables entre un état assemblé du porte-échantillon dans lequel la face arrière (18) du châssis supérieur (11) et la face avant (17) du châssis inférieur (15) sont pressées l'une vers l'autre avec les ouvertures (12, 16) des châssis supérieur et inférieur en regard l'une de l'autre, pour maintenir l'échantillon dans le porte échantillon en regard desdites ouvertures, et un état désassemblé du porte-échantillon dans lequel les châssis supérieur et inférieur sont aptes à être écartés l'un de l'autre pour permettre la mise en place et le retrait de l'échantillon dans et hors du porte échantillon ;
- des moyens d'assemblage de la cellule (32, 33) réglables entre un état dans lequel la face arrière (18) du châssis inférieur (15) du porte échantillon (10) est pressée contre le premier joint primaire (34A), et un état dans lequel le porte échantillon est libre.
**caractérisé :**
- **en ce que** le porte échantillon (10) comporte un premier joint (19) dit secondaire affleurant la face avant (17) du châssis inférieur (15) du porte échantillon (10), le premier joint secondaire entourant l'ouverture traversante (16) du châssis inférieur du porte échantillon (10);
- **en ce que** le châssis inférieur (15) du porte échantillon (10) amovible comporte :
• un deuxième joint (20) dit secondaire affleurant la face avant (17) du châssis inférieur (15) du porte échantillon et entourant l'ouverture traversante (16) du châssis inférieur du porte échantillon, le deuxième joint secondaire (20) étant entouré par le premier joint secondaire (19) ;
• la face avant et la face arrière du châssis inférieur (15) du porte échantillon sont reliées par un deuxième canal (23) débouchant entre les deux joints secondaires (19, 20).

2. Cellule de perméation selon la revendication 1, **caractérisée en ce que** les moyens d'assemblage du porte échantillon (10) comprennent au moins deux vis (24) traversant les faces avant et arrière du châssis supérieur (11) du porte échantillon et la face avant (17) du châssis inférieur (15) du porte échantillon.

3. Cellule de perméation selon la revendication 1 ou 2, **caractérisée en ce que** les moyens d'assemblage de la cellule comprennent au moins deux vis (32) traversant les faces avant et arrière des châssis supérieur et inférieur du porte échantillon, lesdites vis étant vissées dans des logements dédiés (36) ménagés dans le fond (5) de la chambre amont (2).

4. Cellule de perméation selon la revendication 1 ou 2, **caractérisée en ce que** les moyens d'assemblage de la cellule comprennent un moyen (33) pour presser la face avant du châssis supérieur (11) du porte échantillon de manière à maintenir la face arrière (18) du châssis inférieur (15) du porte échantillon pressée contre le premier joint primaire (34A).

5. Cellule de perméation selon l'une des revendications 1 à 4, **caractérisée en ce qu'**un deuxième joint (34B) dit primaire est au contact du fond (5) de la chambre amont, le deuxième joint primaire entourant l'ouverture (6) et étant entouré par le premier joint primaire (34A).

6. Cellule de perméation selon la revendication 5, **caractérisée en ce qu'**un premier canal (25A) débouche dans le fond (5) de la chambre amont entre le premier et le deuxième joints primaires.

7. Cellule de perméation selon la revendication 6, **caractérisée en ce que** le premier canal (25A) comprend une rainure (35) ménagée entre le premier et le deuxième joints primaires.

8. Cellule de perméation selon l'une quelconque des revendications précédentes, **caractérisée en ce que** le deuxième canal (23) comprend une rainure (22A) ménagée sur la face avant du châssis inférieur du porte échantillon (10) et entre les deux joints secondaires (19, 20).

9. Cellule de perméation selon l'une quelconque des revendications précédentes, **caractérisée en ce qu'**un troisième canal (25B) débouche dans le fond (5) de la chambre amont entre le premier joint primaire (34A) et une paroi latérale (2A) délimitant la chambre amont (2) et son fond (5).

10. Cellule de perméation selon la revendication 9, **caractérisée en ce qu'**elle comprend un troisième joint (39) dit primaire en contact avec le châssis supérieur (11) du porte échantillon (10) et la paroi latérale (2A) de la chambre amont, le porte échantillon (10) comportant un troisième joint (26) dit secondaire affleurant la face arrière (14) du châssis supérieur (11) du porte échantillon et entourant l'ouverture traversante (12) du châssis supérieur du porte échantillon.

11. Cellule de perméation selon la revendication 9, **caractérisée en ce qu'**elle comprend un troisième joint (34C) dit primaire en contact avec le fond (5) de la chambre amont et la face arrière (18) du châssis inférieur (15) du porte échantillon (10), le troisième joint primaire entourant le troisième canal (25B) et le premier joint (34A) primaire, le porte échantillon (10) amovible comprenant :
• un troisième joint (26) dit secondaire affleurant la face arrière (14) du châssis supérieur et entourant l'ouverture traversante (12) du châssis supérieur du porte échantillon;
• un quatrième joint (27) dit secondaire en contact avec la face arrière (14) du châssis supérieur du porte échantillon et la face avant (17) du châssis inférieur du porte échantillon, le quatrième joint secondaire entourant le troisième joint secondaire ;
• un quatrième canal (28) débouchant entre le premier (19) et le quatrième (27) joints secondaires et entre le premier (34A) et le troisième (34C) joints primaires.

12. Cellule de perméation selon l'une des revendications 9 à 11, **caractérisée en ce que** le troisième canal (25B) comprend une rainure (38) ménagée dans le fond (5) de la chambre amont, entre le premier joint primaire (34A) et la paroi latérale (2A) délimitant la chambre amont et son fond (5).

## Patentansprüche

1. Eine Permeationszelle (1) zum Messen der Permeation eines Zielgases (7) durch eine Probe (4), die umfasst:
- einen oberen Rahmen, der eine stromaufwärtige Kammer (2) umschließt und das Zielgas (7) enthalten kann und der durch einen Boden (5) geschlossen ist;
- einen unteren Rahmen, der eine stromabwärtige Kammer (3) umschließt, dazu bestimmt, in Fluidverbindung mit einer Detektionseinrichtung für das Zielgas zu stehen;
- eine Öffnung (6), die die stromabwärtige Kammer (3) mit der stromaufwärtigen Kammer (2) verbindet und im Boden (5) der stromaufwärtigen Kammer mündet;
- eine erste, die sogenannte primäre Dichtung (34A) in Kontakt mit dem Boden (5) der stromaufwärtigen Kammer, die die Öffnung (6) umgibt;
- Mittel zur Befestigung der Probe auf dem Boden (5) der stromaufwärtigen Kammer (2);
die Mittel zur Befestigung umfassen:
- einen Probenhalter (10), abnehmbar, so dass er vom oberen und unteren Rahmen der Zelle entfernt werden kann, der Probenhalter umfasst dabei:
• einen oberen Rahmen (11), versehen mit einer Vorderseite (13) und einer Rückseite (14), verbunden mit einer Durchlassöffnung (12);
• einen unteren Rahmen (15), der vom oberen Rahmen abgespreizt werden kann, versehen mit einer Vorderseite (17) und einer Rückseite (18), verbunden mit einer Durchlassöffnung (16);
• Mittel zum Zusammenbau des Probenhalters (24, 33), einstellbar zwischen einem zusammengebauten Zustand des Probenhalters, in dem die Rückseite (18) des oberen Rahmens (11) und die Vorderseite (17) des unteren Rahmens (15) gegeneinander gedrückt werden, zusammen mit den Öffnungen (12, 16) des oberen und unteren Rahmens bezogen aufeinander, um die Probe im Probenhalter gegenüber diesen Öffnungen zu halten und einem auseinandergebauten Zustand des Probenhalters, in dem der obere und untere Rahmens voneinander abgespreizt werden können, um das Einlegen und Entfernen der Probe in und aus dem Probenhalter zu ermöglichen;
- Mittel zum Zusammenbau der Zelle (32, 33), einstellbar zwischen einem Zustand, in dem die Rückseite (18) des unteren Rahmens (15) des Probenhalters (10) gegen die erste, primäre Dichtung (34A) gedrückt wird und einen Zustand, in dem der Probenhalter frei ist.
**gekennzeichnet**
- **dadurch, dass** der Probenhalter (10) eine erste, die sogenannte sekundäre Dichtung (19) enthält, die bündig mit der Vorderseite (17) des unteren Rahmens (15) des Probenhalters (10) abschließt, die erste sekundäre Dichtung umgibt die Durchführungsöffnung (16) des unteren Rahmens des Probenhalters (10);
- dadurch dass der untere Rahmen (15) des beweglichen Probenhalters (10) umfasst:
• eine zweite, sogenannte sekundäre Dichtung (20) umfasst, die bündig mit der Vorderseite (17) des unteren Rahmens (15) des Probenhalters abschließt und die Durchführungsöffnung (16) des unteren Rahmens des Probenhalters umgibt, wobei die zweite sekundäre Dichtung (20) von der ersten sekundären Dichtung (19) umgeben ist;
• die Vorder- und die Rückseite des unteren Rahmens (15) des Probenhalters sind über einen zweiten Kanal (23) verbunden, der zwischen den beiden sekundären Dichtungen (19, 20) mündet.

2. Permeationszelle gemäß Anspruch 1, **dadurch gekennzeichnet, dass** die Mittel zum Zusammenbau des Probenhalters (10) mindestens zwei Schrauben (24) umfassen, die durch die Vorder- und Rückseite des oberen Rahmens (11) des Probenhalters und die Vorderseite (17) des unteren Rahmens (15) des Probenhalters führen.

3. Permeationszelle gemäß Anspruch 1 oder 2, **dadurch gekennzeichnet, dass** die Mittel zum Zusammenbau der Zelle mindestens zwei Schrauben (32) umfassen, die durch die Vorder- und Rückseite des oberen Rahmens des Probenhalters führen, wobei diese Schrauben in spezielle Gehäuse (36) eingeschraubt sind, die im Boden (5) der stromaufwärtigen Kammer (2) ausgespart sind.

4. Permeationszelle gemäß Anspruch 1 oder 2, **dadurch gekennzeichnet, dass** die Mittel zum Zusammenbau der Zelle ein Mittel (33) umfassen, um die Vorderseite des oberen Rahmens (11) des Probenhalters so anzudrücken, dass die Rückseite (18) des unteren Rahmens (15) des Probenhalters, die gegen die erste, primäre Dichtung (34A) gedrückt wird, gehalten wird.

5. Permeationszelle gemäß irgendeinem der Ansprüche 1 bis 4, **dadurch gekennzeichnet, dass** eine zweite, sogenannte primäre Dichtung (34B) Kontakt zum Boden (5) der stromaufwärtigen Kammer hat, die zweite primäre Dichtung umgibt die Öffnung (6) und ist selbst wiederum von der ersten, primären Dichtung (34A) umgeben.

6. Permeationszelle gemäß Anspruch 5, **dadurch gekennzeichnet, dass** ein erster Kanal (25A) im Boden (5) der stromaufwärtigen Kammer zwischen der ersten und zweiten primären Dichtung mündet.

7. Permeationszelle gemäß Anspruch 6, **dadurch gekennzeichnet, dass** der erste Kanal (25A) eine Rille (35) aufweist, ausgespart zwischen der ersten und der zweiten primären Dichtung.

8. Permeationszelle gemäß irgendeinem der vorhergehenden Ansprüche, **dadurch gekennzeichnet, dass** der zweite Kanal (23) eine Rille (22A) aufweist, ausgespart auf der Vorderseite des unteren Rahmens des Probenhalters (10) zwischen den beiden sekundären Dichtungen (19, 20).

9. Permeationszelle gemäß irgendeinem der vorhergehenden Ansprüche, **dadurch gekennzeichnet, dass** ein dritter Kanal (25B) im Boden (5) der stromaufwärtigen Kammer mündet, zwischen der ersten, primären Dichtung (34A) und einer Seitenwand (2A), die die stromaufwärtige Kammer (2) und ihren Boden (5) begrenzt.

10. Permeationszelle gemäß Anspruch 9, **dadurch gekennzeichnet, dass** sie eine dritte, sogenannte primäre Dichtung (39) umfasst, die Kontakt mit dem oberen Rahmen (11) des Probenhalters (10) und der Seitenwand (2A) der stromaufwärtigen Kammer hat, wobei der Probenhalter (10) eine dritte, sogenannte sekundäre Dichtung (26) aufweist, die die Rückseite (14) des oberen Rahmens (11) des Probenhalters berührt und die Durchführungsöffnung (12) des oberen Rahmens des Probenhalters umgibt.

11. Permeationszelle gemäß Anspruch 9, **dadurch gekennzeichnet, dass** sie eine dritte, sogenannte primäre Dichtung (34C) aufweist, die Kontakt mit dem Boden (5) der stromaufwärtigen Kammer der Rückseite (18) des unteren Rahmens (15) des Probenhalters (10) hat, wobei die dritte primäre Dichtung den dritten Kanal (25B) und die erste, primäre Dichtung (34A) umgibt, der abnehmbare Probenhalter (10) umfasst:
• eine dritte, sogenannte sekundäre Dichtung (26) die die Rückseite (14) des oberen Rahmens (11) berührt und die Durchführungsöffnung (12) des oberen Rahmens des Probenhalters umgibt;
• eine vierte, sogenannte sekundäre Dichtung (27), in Kontakt mit der Rückseite (14) des oberen Rahmens des Probenhalters und der Vorderseite (17) des unteren Rahmens des Probenhalters, wobei die vierte sekundäre Dichtung die dritte sekundäre Dichtung umgibt;
• ein vierter Kanal (28) der zwischen der ersten (19) und zweiten (27) sekundären Dichtung und zwischen der ersten (34A) und der dritten primären Dichtung (34C) mündet.

12. Permeationszelle gemäß irgendeinem der Ansprüche 9 bis 11, **dadurch gekennzeichnet, dass** der dritte Kanal (25B) eine Rille (38) umfasst, ausgespart im Boden (5) der stromaufwärtigen Kammer zwischen der ersten primären Dichtung (34A) und der Seitenwand (2A), die die stromaufwärtige Kammer und ihren Boden (5) begrenzt.

## Claims

1. A permeation cell (1) capable of measuring the permeation of a target gas (7) through a sample (4) comprising:
- an upper frame delimiting an upstream chamber (2) capable of containing the target gas (7) and delimited by a bottom (5);
- a lower frame delimiting a downstream chamber (3) capable of being in fluidic communication with a target gas detection device;
- an opening (6) connecting the downstream chamber (3) to the upstream chamber (2) and emerging into the bottom (5) of the upstream chamber;
- a first so-called primary seal (34A) in contact with the bottom (5) of the upstream chamber and surrounding the opening (6);
- means for fixing the sample at the bottom (5) of the upstream chamber (2);
the fixing means comprising:
- a sample holder (10) which is removable, so that it can be detached from the upper and lower frames of the cell, the sample holder comprising:
• an upper frame (11) provided with a front surface (13) and with a rear surface (14) connected by a through opening (12);
• a lower frame (15), capable of being taken away from the upper frame, provided with a front surface (17) and with a rear surface (18) connected by a through opening (16);
• means for assembling the sample holder (24, 33), settable between an assembled state of the sample holder where the rear surface (18) of the upper frame (11) and the front surface (17) of the lower frame (15) are pressed towards each other with the openings (12, 16) of the upper and lower frames facing each other, to hold the sample in the sample holder opposite said openings, and a disassembled state of the sample holder where the upper and lower frames are capable of being taken away from each other to allow the installing and the retrieval of the sample from the sample holder;
- means for assembling the cell (32, 33), settable between a state where the rear surface (18) of the lower frame (15) of the sample holder (10) is pressed against the first primary seal (34A) and a state where the sample holder is free,
**characterized:**
- **in that** the sample holder (10) comprises a first so-called secondary seal (19) flush with the front surface (17) of the lower frame (15) of the sample holder (10), the first secondary seal surrounding the through opening (16) of the lower frame of the sample holder (10);
- **in that** the lower frame (15) of the removable sample holder (10) comprises:
• a second so-called secondary seal (20) flush with the front surface (17) of the lower frame (15) of the sample holder and surrounding the through opening (16) of the lower frame of the sample holder, the second secondary seal (20) being surrounded with the first secondary seal (19);
• the front surface and the rear surface of the lower frame (15) of the sample holder are connected by a second channel (23) emerging between the two secondary seals (19, 20).

2. The permeation cell of claim 1, **characterized in that** the means for assembling the sample holder (10) comprise at least two screws (24) crossing the front and rear surfaces of the upper frame (11) of the sample holder and the front surface (17) of the lower frame (15) of the sample holder.

3. The permeation cell of claim 1 or 2, **characterized in that** the cell assembly means comprise at least two screws (32) crossing the front and rear surfaces of the upper and lower frames of the sample holder, said screws being screwed in dedicated housings (36), formed in the bottom (5) of the upstream chamber (2).

4. The permeation cell of claim 1 or 2, **characterized in that** the cell assembly means comprises means (33) for pressing the front surface of the upper frame (11) of the sample holder to hold the rear surface (18) of the lower frame (15) of the sample holder pressed against the first primary seal (34A).

5. The permeation cell of any of claims 1 to 4, **characterized in that** a second so-called primary seal (34B) is in contact with the bottom (5) of the upstream chamber, the second primary seal surrounding the opening (6) and being surrounded with the first primary seal (34A).

6. The permeation cell of claim 5, **characterized in that** a first channel (25A) emerges into the bottom (5) of the upstream chamber between the first and the second primary seals.

7. The permeation cell of claim 6, **characterized in that** the first channel (25A) comprises a groove (35) formed between the first and the second primary seals.

8. The permeation cell of any of the foregoing claims, **characterized in that** the second channel (23) comprises a groove (22A) formed on the front surface of the lower frame of the sample holder (10) and between the two secondary seals (19, 20).

9. The permeation cell of any of the foregoing claims, **characterized in that** a third channel (25B) emerges into the bottom (5) of the upstream chamber between the first primary seal (34A) and a lateral wall (2A) delimiting the upstream chamber (2) and its bottom (5).

10. The permeation cell of claim 9, **characterized in that** it comprises a third so-called primary seal (39) in contact with the upper frame (11) of the sample holder (10) and the lateral wall (2A) of the upstream chamber, the sample holder (10) comprising a third so-called secondary seal (26) flush with the rear surface (14) of the upper frame (11) of the sample holder and surrounding the through opening (12) of the upper frame of the sample holder.

11. The permeation cell of claim 9, **characterized in that** it comprises a third so-called primary seal (34C) in contact with the bottom (5) of the upstream chamber and the rear surface (18) of the lower frame (15) of the sample holder (10), the third primary seal surrounding the third channel (25B) and the first primary seal (34A), the removable sample holder (10) comprising:
• a third so-called secondary seal (26) flush with the rear surface (14) of the upper frame and surrounding the through opening (12) of the upper frame;
• a fourth so-called secondary seal (27) in contact with the rear surface (14) of the upper frame of the sample holder and the front surface (17) of the lower frame of the sample holder, the fourth secondary seal surrounding the third secondary seal;
• a fourth channel (28) emerging between the first (19) and the fourth (27) secondary seals and between the first (34A) and the third (34C) primary seals.

12. The permeation cell of any of claims 9 to 11, **characterized in that** the third channel (25B) comprises a groove (38) formed in the bottom (5) of the upstream chamber between the first primary seal (34A) and the lateral wall (2A) delimiting the upstream chamber and its bottom (5).
